(19)

Europäisches
Patentamt

European
Patent Office

Office européen
des brevets

(11) **EP 2 998 886 A1**

(12) **EUROPEAN PATENT APPLICATION**

(43) Date of publication:
**23.03.2016 Bulletin 2016/12**

(51) Int Cl.:
***G06F 17/30*** (2006.01)

(21) Application number: **15183578.2**

(22) Date of filing: **02.09.2015**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**MA**

(30) Priority: **18.09.2014 US 201414490572**

(71) Applicant: **Palo Alto Research Center,
Incorporated
Palo Alto, CA 94304 (US)**

(72) Inventors:
• **MAHADEVAN, Priya
Sunnyvale, CA California 94089 (US)**
• **SCOTT, Glenn C.
Los Altos, CA California 94024 (US)**
• **UZUN, Ersin
Campbell, CA California 95008 (US)**

(74) Representative: **Gill Jennings & Every LLP
The Broadgate Tower
20 Primrose Street
London EC2A 2ES (GB)**

(54) **REPUTATION-BASED DISCOVERY OF CONTENT OBJECTS**

(57)   A content-discovery system allows a node in a Content Centric Networks (CCN) to discover content over CCN. The CCN node can generate an Interest that includes a query for discovering content associated with a given name prefix, and after disseminating the Interest over CCN, can receive a query-result Content Object that includes a listing of matching Content Objects and their reputation information. The CCN node can also process Interests issued by other CCN nodes that would like to discover content. After receiving an Interest comprising a query for discovering content, the CCN node searches a repository for a set of Content Objects that match the query. The CCN node generates a results list that includes the Content Object in the search results and their reputation information. The CCN node then generates and returns a query-result Content Object that includes the Interest's name, and whose payload includes the results list.

FIG. 1

EP 2 998 886 A1

**Description**

**BACKGROUND**

**Field**

This disclosure is generally related to Content Centric Networks. More specifically, this disclosure is related to discovering content in nearby CCN nodes.

**Related Art**

The proliferation of mobile computing and cellular networks is making digital content more mobile than ever before. People can use their smartphones to generate content, to consume content, or even to provide Internet access to other computing devices that generate or consume content. Oftentimes, a device's network location can change as a person takes this device to a new physical location. This can make it difficult to communicate with this device under a traditional computer network (e.g., the Internet) when the device's new network location is not known.

To solve this problem, content-centric network (CCN) architectures have been designed to facilitate accessing digital content based on its name, regardless of the content's physical or network location. A typical CCN architecture forwards two types of packets: Interests and Content Objects. Interests include a name for a piece of named data, and serve as a request for the piece of named data. Content Objects, on the other hand, typically include a payload, and are only forwarded along a network path that has been traversed by an Interest with a matching name, and traverse this path in the reverse direction taken by the Interest packet.

In typical CCN architectures, Content Objects are only sent as a response to an Interest packet; Content Objects are not sent unsolicited in a CCN network. Hence, a CCN node that is to request certain content needs to know which local interfaces link to other CCN nodes that can provide the desired content. However, if the local CCN node does not know which local interfaces map to the desired Content Object, the local CCN node may choose a default interface that may not be the best interface for accessing the Content Object.

**SUMMARY**

One embodiment provides a content-discovery system that allows a node in a Content Centric Networks (CCN) to discover content over CCN. During operation, the CCN node can generate an Interest that includes a query for discovering content associated with a given name prefix, and disseminates the Interest via one or more faces associated with the name prefix. In response to disseminating the Interest, the CCN node can receive a query-result Content Object that satisfies the Interest, and that includes a listing of matching Content Objects and their reputation information. The CCN node can cache the query-result Content Object in a local repository.

The CCN node can also process Interests issued by other CCN nodes that would like to discover content. The CCN node can receive an Interest comprising a query for discovering content associated with the Interest's name prefix, and searches a repository for a set of Content Objects that match the query. The CCN node determines reputation information for each Content Object in the search results, and generates a results list that includes, for a respective Content Object in the search results, the respective Content Object's name and reputation information. The CCN node then generates a query-result Content Object that includes the Interest's name, and whose payload includes the results list, and returns the query-result Content Object to satisfy the Interest.

In CCN, each piece of content is individually named, and each piece of data is bound to a unique name that distinguishes the data from any other piece of data, such as other versions of the same data or data from other sources. This unique name allows a network device to request the data by disseminating a request or an Interest that indicates the unique name, and can obtain the data independent from the data's storage location, network location, application, and means of transportation. The following terms describe elements of a CCN architecture:

Content Object: A single piece of named data, which is bound to a unique name. Content Objects are "persistent," which means that a Content Object can move around within a computing device, or across different computing devices, but does not change. If any component of the Content Object changes, the entity that made the change creates a new Content Object that includes the updated content, and binds the new Content Object to a new unique name.

Unique Names: A name in an CCN is typically location independent and uniquely identifies a Content Object. A data-forwarding device can use the name or name prefix to forward a packet toward a network node that generates or stores the Content Object, regardless of a network address or physical location for the Content Object. In some embodiments, the name may be a hierarchically structured variable-length identifier (HSVLI). The HSVLI can be divided into several hierarchical components, which can be structured in various ways. For example, the individual name components parc, home, ccn, and test.txt can be structured in a left-oriented prefix-major fashion to form the name "/parc/home/ccn/test.txt." Thus, the name "/parc/home/ccn" can be a "parent" or "prefix" of "/parc/home/ccn/test.txt." Additional components can be used to distinguish between different versions of the content item, such as a collaborative document.

In some embodiments, the name can include an identifier, such as a hash value that is derived from the Content Object's data (e.g., a checksum value) and/or from elements of the Content Object's name. A description of a hash-based name is described in U.S. Patent Application No. 13/847,814 (entitled "ORDERED-ELEMENT NAMING FOR NAME-BASED PACKET FORWARDING," by inventor Ignacio Solis, filed 20 March 2013), which is hereby incorporated by reference. A name can also be a flat label. Hereinafter, "name" is used to refer to any name for a piece of data in a name-data network, such as a hierarchical name or name prefix, a flat name, a fixed-length name, an arbitrary-length name, or a label (e.g., a Multiprotocol Label Switching (MPLS) label).

Interest: A packet that indicates a request for a piece of data, and includes a name (or a name prefix) for the piece of data. A data consumer can disseminate a request or Interest across an information-centric network, which CCN routers can propagate toward a storage device (e.g., a cache server) or a data producer that can provide the requested data to satisfy the request or Interest.

A description of a CCN architecture is described in U.S. Patent Application No. 12/338,175 (entitled "CONTROLLING THE SPREAD OF INTERESTS AND CONTENT IN A CONTENT CENTRIC NETWORK," by inventors Van L. Jacobson and Diana K. Smetters, filed on 18 December 2008), which is hereby incorporated by reference.

In some embodiments, the reputation information includes at least one of a reputation value, a set of attribute values; and a set of attribute weights.

In some embodiments, the query includes one or more attribute criteria, weight values for one or more attributes, metadata criteria, and/or a repository that is to be searched.

In some embodiments, the CCN node can determine, from the query, a repository to search for matching Content Objects.

In some embodiments, while searching the repository, the CCN node performs a lookup in the repository to identify a Content Object with a name prefix that matches the Interest's name.

In some variations to these embodiments, while searching the repository, the CCN node selects the identified Content Object whose attributes satisfy the query's attribute criteria.

In some embodiments, the repository stores the Content Object along with corresponding reputation information, and wherein determining the reputation information involves accessing the reputation information from the repository.

In some embodiments, the repository can include a Content Store that caches Content Objects, and/or a storage repository that stores one or more collections of Content Objects.

In some embodiments, the query-result Content Object also includes one or more other query-result Content Objects stored in the repository in association with the Interest's name or name prefix.

In some embodiments, the query-result Content Object includes a Content Object, from the search results, that has a highest reputation value.

## BRIEF DESCRIPTION OF THE FIGURES

FIG. 1 presents an exemplary computing environment that facilitates discovering content over a Content Centric Network (CCN) in accordance with an embodiment.

FIG. 2A illustrates an exemplary content-discovery Interest in accordance with an embodiment.

FIG. 2B illustrates an exemplary query-result Content Object in accordance with an embodiment.

FIG. 3 presents a flow chart illustrating a method for discovering content at neighboring CCN nodes in accordance with an embodiment.

FIG. 4 presents a flow chart illustrating a method for processing a content-discovery Interest in accordance with an embodiment.

FIG. 5 presents a flow chart illustrating a method for processing a query that discovers Content Objects in one or more repositories in accordance with an embodiment.

FIG. 6 illustrates an exemplary apparatus that facilitates discovering content over CCN in accordance with an embodiment.

FIG. 7 illustrates an exemplary computer system that facilitates discovering content over CCN in accordance with an embodiment.

In the figures, like reference numerals refer to the same figure elements.

## DETAILED DESCRIPTION

The following description is presented to enable any person skilled in the art to make and use the embodiments, and is provided in the context of a particular application and its requirements. Various modifications to the disclosed embodiments will be readily apparent to those skilled in the art, and the general principles defined herein may be applied to other embodiments and applications without departing from the spirit and scope of the present disclosure. Thus, the present invention is not limited to the embodiments shown, but is to be accorded the widest scope consistent with the principles and features disclosed herein.

## Overview

Embodiments of the present invention provide a resource-discovery system that solves the problem of discovering nearby content or resources by querying neighboring network nodes for a listing of content or resources and their related reputation information. For example, in a Content Centric Network (CCN), CCN nodes can use a Content Store (CS) to cache some Content Objects they receive, and/or can use other repositories to store persistent Content Objects. These CCN nodes can also host one or more resources, such as an application or a physical component, and can assign a name prefix to each local resource. Each of these Content Objects and resources may have associated reputation information that measures the quality of the Content Object or resource with respect to certain criteria. Hereinafter, the term "content" and "Content Object" are used interchangeably, and are also used to describe any type of resource available at a CCN node.

The local CCN node can discover nearby content by generating and disseminating an Interest that queries its neighboring CCN nodes. The query can include certain criteria, such as a name prefix for the desired content, metadata criteria that needs to be met by the matching content's metadata, and/or reputation-related criteria that need to be met by the reputation information of the matching content. The neighboring CCN nodes that can provide access to the matching content can return a listing of these matching entities and their related reputation information.

The reputation information can include attribute values that rate various quality attributes for the content, a weight for each attribute, and a reputation value computed using the attribute values and weights. The attributes can correspond to various metrics that gauge a characteristic of certain content, such as the performance, reliability, or security of the content. For example, a "signed" attribute can indicate a likelihood that a Content Object or resource includes or produces data that is signed properly. Also, a "bitrate" or "latency" attribute can specify a numeric value that represents a performance of a resource, such as a network interface or a storage device.

In some embodiments, a system administrator can assign a weighted value to each attribute so that the computed reputation value achieves a desired objective. The reputation value can fall within a predetermined range (e.g., [0,1], or [0, 100]), such that higher values indicate a higher trustworthiness or quality for the Content Object. A description of reputation information and the methods for computing and using reputation values is described in U.S. Patent Application No. TBD (Atty. Docket No. PARC-20140181US01, entitled "Reputation-based Strategy for Forwarding and Responding to Interests over a Named Data Network," by inventors Priya Mahadevan and Glenn C. Scott, filed TBD), which is hereby incorporated by reference.

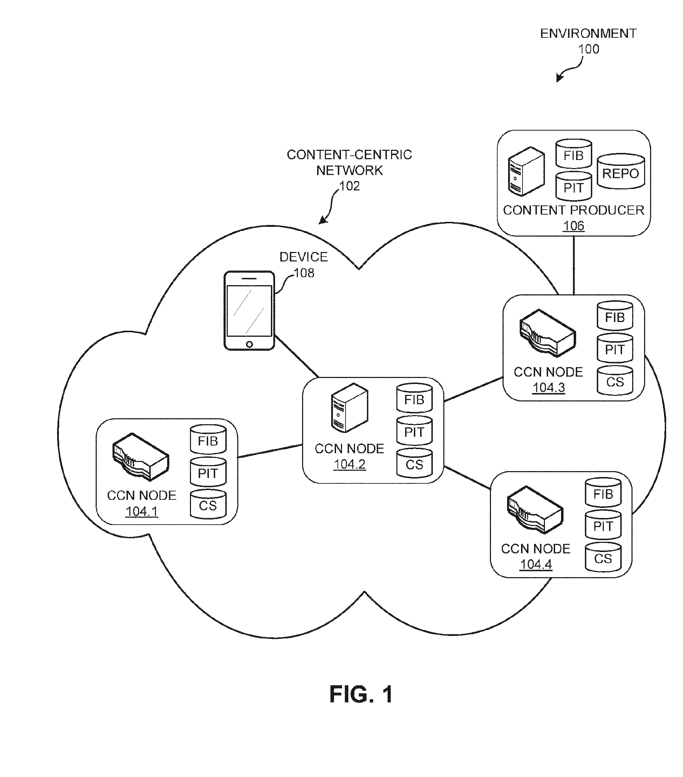

FIG. 1 presents an exemplary network environment 100 that facilitates discovering content over a Content Centric Network (CCN) 102 in accordance with an embodiment. Specifically, CCN 102 can include a number of devices, such as a content producer 106, a personal computing device 108, and any other type of CCN nodes 104 that can forward Interests and Content Objects across CCN 102. Note that personal computing device 108 can be any type of a computing device, including a mobile computing device, such as a laptop computer, a tablet or slate computer, a smartphone, or a personal digital assistant (PDA), or a stationary computing device, such as a desktop computer or a home media server.

In addition, each device may have a pending interest table (PIT), a forwarding information base (FIB), a Content Store (CS) or content repository, a reputation computation module, and a forwarder. CCN nodes 104, for example, can include a FIB and a PIT, as well a CS to temporarily cache Content Objects they receive. Content producer 106, on the other hand, may include a FIB and a PIT, and a repository that stores (e.g., persistently or for a long-term period) a collection of Content Objects hosted by content producer 206. Device 108 may include a FIB and a PIT, and may include both a CS and one or more repositories for storing persistent Content Objects.

The CCN nodes in CCN 102 can also include one or more resources that can produce Content Objects. Each of these resources can be assigned a unique routable prefix that can be used to query the resource. For example, device 108 may include a global positioning system (GPS) service that can produce a Content Object which includes a current or recent GPS location for device 108. An application within device 108, or a remote CCN node (e.g., content producer 106) with valid credentials, can generate an Interest with a routable prefix to the GPS service of device 108 to determine the current or recent GPS location for device 108. When the GPS service receives an Interest from an authorized entity, the GPS service can generate and return a Content Object that includes the requested information. Similarly, content producer 106 can also include one or more resources or services that can generate and return a Content Object on-the-fly to satisfy an Interest that requests data from the resource or service.

In some embodiments, a CCN network node can query its neighboring CCN nodes over CCN 102 to discover nearby content or resources. For example, CCN node 104.2 can generate and disseminate a content-discovery Interest 200 for the name prefix "/parc/csl/papers" to its neighboring CCN nodes, including device 108 as well as CCN nodes 104.1, 104.3 and 104.4. This content-discovery Interest can include a query which can specify criteria for selecting which Content Objects and resources under the name prefix "/parc/csl/papers" to include in the query results. Each of these neighboring CCN nodes can process the query to generate a query-result Content Object that includes a listing of the local Content Objects and resources that match the query's criteria, and also includes the reputation information for these Content Objects and resources.

In some embodiments, a CCN node can generate the query-result Content Object to also include other query-result Content Objects that this CCN node has received and cached from its CCN neighbors. For example, CCN node 104.3 may have cached a query-result Content Object that includes the content and resources available from Content Producer 106 under the "/parc/csl/papers" name prefix. Then, when CCN node 104.2 queries CCN node 104.3 for the same name prefix (or a subset of the name prefix, such as "/parc/csl"), CCN node 104.3 can return a new query-result Content Object that also includes the query-result Content Object from Content Producer 106. CCN node 104.2 can cache the query-result Content Objects produced by CCN node 104.3 and Content Producer 106 in the local CS, in association with the name prefix "parc/csl/papers." Moreover, if device 108 queries CCN node 104.2 for a listing of content and resources for the name prefix "parc/csl/papers," CCN node 104.2 can return a query-result Content Object that includes a listing of its local content and resources, as well as the cached query-result Content Objects that were produced by CCN nodes 104.1, 104.3, 104.4, and Content Producer 106.

Each query-result Content Object is signed by the CCN node that generates the query-result Content Object. This signature can include, for example, the CCN node's publisher key identifier (PubKeyID) and/or digital signature. The query-result Content Object's payload can also include additional information about the publisher, such as a name or logical identifier for the CCN node, or for an organization or person that manages the CCN node. Hence, other CCN nodes that receive a query-result Content Object can use the digital signature to determine from where certain reputation information originated.

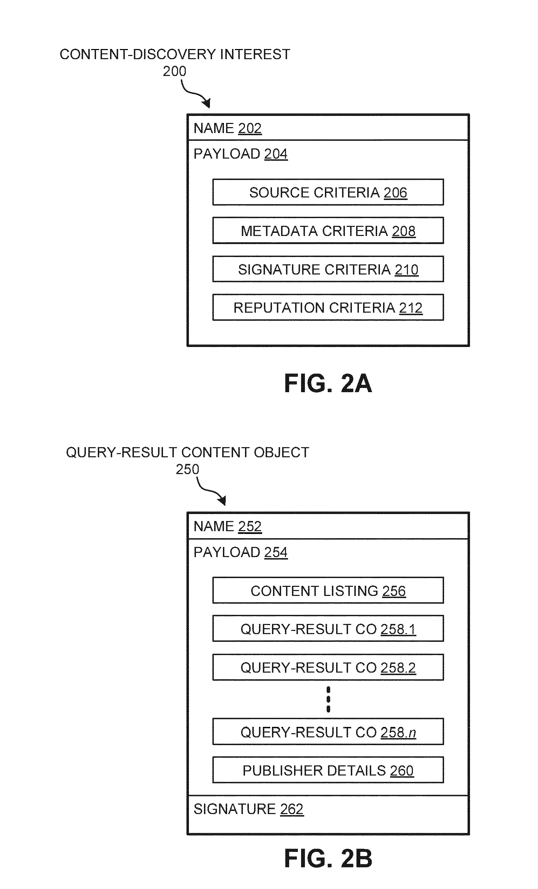

FIG. 2A illustrates an exemplary content-discovery Interest 200 in accordance with an embodiment. In some embodiments, content-delivery Interest 200 can include a name 202 that includes a name or name prefix for a CCN Content Object or a collection of Content Objects, and a payload 204. Payload 204 can include a set of query criteria, which the neighboring CCN nodes use to search for relevant content. This query criteria can include, for example, a source criteria 206, a metadata criteria 208, a signature criteria 210, and a reputation criteria 212.

Source criteria 206 can specify a source repository that is to be searched, such as a Content Store (CS) or any other storage repository. For example, source criteria 206 can have the form:

$$\text{source} = \{\text{source\_criteria}\} \qquad (1)$$

In expression (1), the exemplary token "source=" can signify that the token {source_criteria} includes a listing of various repositories that can be searched. This repository listing can include "CS" to search the Content Objects that have been cached in the Content Store, and/or can include "repo" to search any repositories that store persistent Content Objects. The repository listing can also include a name for a specific repository that is to be searched at the neighboring CCN nodes, such as "public" for a repository that includes publicly-accessible content, or "PARC" for a repository that requires PARC-specific credentials for access.

Metadata criteria 208 can include a set of search parameters that filter the matching Content Objects based on their metadata information. The query parameters for metadata criteria 208 can include any metadata parameters now known or later developed. For example, Interest 200 can filter the query results by content type and creation date using metadata criteria:

$$\text{type} = \{\text{content\_type}\}; \ \text{max\_creation\_date} = \{\text{date}\} \qquad (2)$$

In CCN, a publisher can sign a Content Object using cryptographic digital signature associated with the publisher. This cryptographic digital signature can have a chain of trust to a trusted third party, such as a certification authority. In some embodiments, signature criteria 210 can specify an entity that needs to sign the matching Content Objects in the query results. This way, when a CCN node processes Interest 200 to search for content, this CCN node will generate the query results to only include Content Objects that have been signed by the entity specified by signature criteria 210. Signature criteria 210 can have the form:

$$signature=\{target\_entity\} \qquad (3)$$

In expression (3), the token {target_entity} can specify a CCN name or name prefix associated with the target entity that is to sign the resulting Content Objects.

Reputation criteria 212 can specify reputation information that can be used to select Content Objects to return in the query results. For example, a CCN node may want to discover Content Objects based on a specific set of reputation attributes, which gauge how well the Content Objects meet certain performance, reliability, and/or security metrics. The CCN node can generate a content-discovery Interest 200 that specifies this set of reputation attributes in reputation criteria 212. The neighboring CCN nodes that receive Interest 200 can compute new reputation values for their local Content Objects using this set of reputation attributes. For example, the CCN node may be interested in a list of Content Objects that are at least 80% likely to be signed properly. Hence, the CCN node can generate content-discovery Interest 200 with reputation criteria 212 that includes only the "signature" attribute in reputation criteria 212, and that requires a reputation value of at least 80%.

In some embodiments, reputation criteria 212 can also specify weight values for the reputation attributes. The neighboring CCN nodes can compute new reputation values for the Content Objects using their local attribute values and the weight values specified in the Interest's reputation criteria 212. However, if reputation criteria 212 do not specify attribute weights, the neighboring nodes can use their local weight values to compute the new reputation values for their Content Objects.

Reputation criteria 212 can also specify a reputation value, or a range of reputation values (e.g., a maximum or minimum reputation value), that needs to be satisfied by the Content Objects in the query results. When generating the query results, the neighboring CCN nodes analyze the local Content Object's reputation information to select the Content Objects whose reputation value satisfies the reputation value or range of values of reputation criteria 212. However, if reputation criteria 212 do not specify a reputation value, the neighboring CCN nodes can return query results that include all matching Content Objects and their reputation information, regardless of their reputation values.

In some embodiments, a content-discovery Interest may not include a payload. For example, the content-discovery Interest can include the query appended to the name prefix in the Interest's name:

$$\{name\ prefix\}/q=\{query\_parameters\} \qquad (5)$$

In expression (5), the name component {name prefix} can include the name or name prefix for the Content Object collection being searched at the neighboring nodes, such as the name prefix "/parc/csl/papers." The name component "q={query_parameters}" can include the token "q=" that designates the start of a query, followed by a listing of query parameters. Also, {query_parameters} can include search criteria that configures how a neighboring node searches for content, such as source criteria 206, metadata criteria 208, signature criteria 210, and/or reputation criteria 212. Note that while the exemplary form (5) uses the token "q=" to designate the start of the query parameters, it is possible for query-delivery Interests to designate the query using any other token that the CCN network nodes are configured to interpret as the start of a content-discovery query.

Once a neighboring CCN node generates a listing of Content Objects that satisfy the content-discovery query of Interest 200, the CCN node can generate and return a query-result Content Object that includes the listing of Content Objects.

FIG. 2B illustrates an exemplary query-result Content Object 250 in accordance with an embodiment. Specifically, Content Object 250 can include a name 252, which matches that of the initial content-discovery Interest. Content Object 250 also includes a cryptographic signature 262, which is signed by the CCN node that generated Content Objet 250.

Content Object 250 also includes a payload 254 that includes a content listing 256 of Content Objects that satisfy the Interest's query. Content listing 256 can include information for the set of Content Objects that satisfy the Interest's query. This Content Object information can include, for example, a Content Object's name, its reputation information, and access control information that governs access to the Content Objet. Hence, a CCN node that receives query-result Content Object 250 can analyze the reputation information and access control information in content listing 256 to determine which discovered Content Objects have a sufficiently high reputation, and can be accessed by the CCN node.

In some embodiments, the reputation information can include one or more attributes that reflect the access control information. For example, a "pay wall" attribute can reflect a likelihood that a certain Content Object requires a user to purchase or subscribe to a collection of content (e.g., by subscribing to "/NYTimes/news/"), or whether the Content Object is free to access.

In some embodiments, a CCN node can cache a query-result Content Objects it receives, in association with a CCN name prefix that corresponds to the Content Object's query results. When the CCN node receives a content-discovery Interest for the same name prefix, the CCN node can return the query-result Content Objects that it has cached for this name prefix into its query results for the Interest. Payload 254 can also include these other query-result Content Objects 258, which have been cached in association with a CCN name that matches or includes name 252.

In some embodiments, payload 254 can also include additional information about the CCN node that generated query-result Content Objet 250, such as a name or logical identifier for the CCN node, or for an organization or person that manages the CCN node. Hence, other CCN nodes that receive a query-result Content Object can use the digital signature to determine from where certain reputation information originated.

If some of this additional information is private or sensitive information, the CCN node can generate publisher details 260 in encrypted form so that publisher details 260 is only accessible within an administrative boundary. This administrative boundary can include, for example, a set of computer devices owned by, managed by, or provisioned to operate within an organization, or can include a set of computing devices that have been authorized by an administrator to access the sensitive information in publisher details 260.

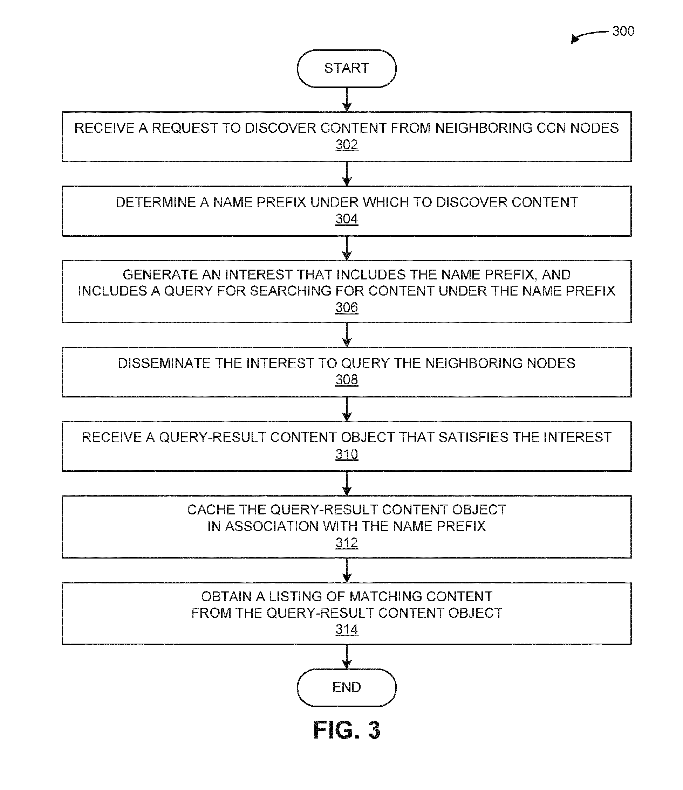

FIG. 3 presents a flow chart illustrating a method 300 for discovering content at neighboring CCN nodes in accordance with an embodiment. During operation, a CCN node can receive a request to discover content from neighboring CCN nodes (operation 302). The request can originate from an application, from a local user, or from any other entity that desires to discover content. For example, a user may select an existing Content Object, and may request that the local CCN node discover other Content Objects related to the existing Content Object. These other Content Objects may include older versions, newer versions, or may include other Content Objects from the same publisher or related to the existing Content Object's classification. As another example, an application may implement a content browser that discovers nearby content, and presents the list of nearby content to a local user. The local user can select which nearby Content Objects to access from neighboring CCN nodes.

The local CCN node can determine a name prefix under which to discover content, such as a name prefix associated with a publisher or an existing Content Object, or a name prefix specified by a local user (operation 304). The network node then generates an Interest that includes the name prefix, and includes a query for searching for content under the name prefix (operation 306). After disseminating the Interest to query the neighboring CCN nodes (operation 308), the local network node may receive a query-result Content Object that satisfies the Interest (operation 310). The local CCN node can cache the query-result Content Object in association with the name prefix (operation 312), and can obtain a listing of matching Content Objects from the query-result Content Object (operation 314).

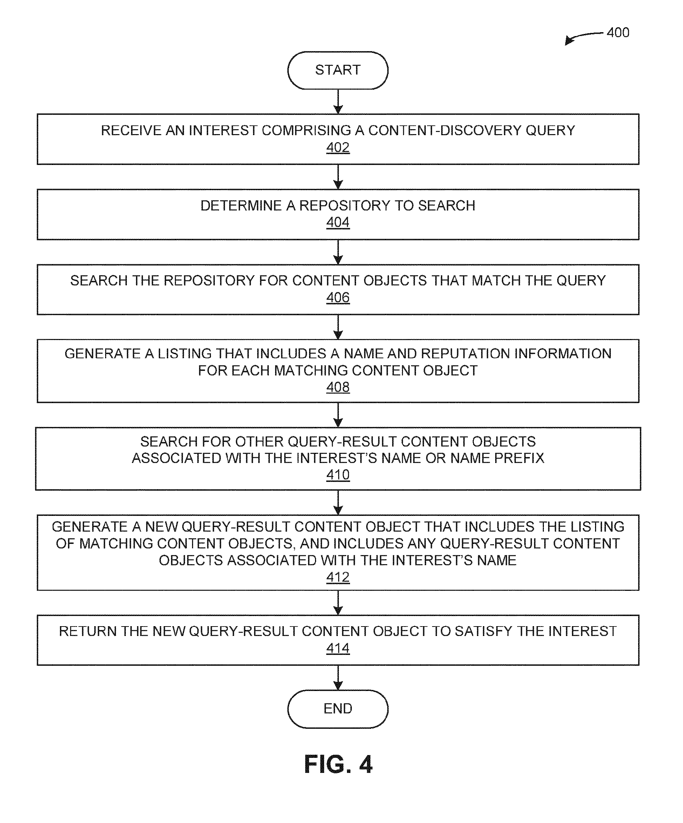

FIG. 4 presents a flow chart illustrating a method 400 for processing a content-discovery Interest in accordance with an embodiment. During operation, the local CCN node can receive an Interest comprising a content-discovery query (operation 402). The content-discovery query can include search criteria for discovering content, such as metadata criteria, signature criteria, and reputation criteria. The CCN node can determine a repository to search, such as based on parameters in the content-discovery query, and/or based on local administrative parameters. The local administrative parameters can include access control information for a set of local repositories, which the node can use to determine whether the Interest specifies access credentials that grant the Interest access to a given repository.

The local CCN node can then search the repository (or set of repositories) for Content Objects that match the query (operation 406), and can generate a listing that includes a name and reputation information for each matching Content Object (operation 408). In some embodiments, the CCN node can search for the matching Content Objects by selecting Content Objects whose name or name prefix includes the Interest's name, and whose contents satisfy the Interest's metadata criteria, signature criteria, and/or reputation criteria.

Recall that a CCN node can store or cache query-result Content Objects that it receives in response to querying its neighboring CCN nodes. These query-result Content Objects specify identifying information for the CCN node that responded to the query, and can include a listing of Content Objects that are available from this CCN node. In some embodiments, the CCN node can also search through these existing query-result Content Objects, to obtain any existing query-result Content Objects that are stored in association with the Interest's name or name prefix (operation 410).

The local CCN node then generates a new query-result Content Object that includes the listing of matching Content Objects, and includes any existing query-result Content Objects that are stored in association with the Interest's name (operation 412). The CCN node returns the new query-result Content Object to satisfy the Interest (operation 414).

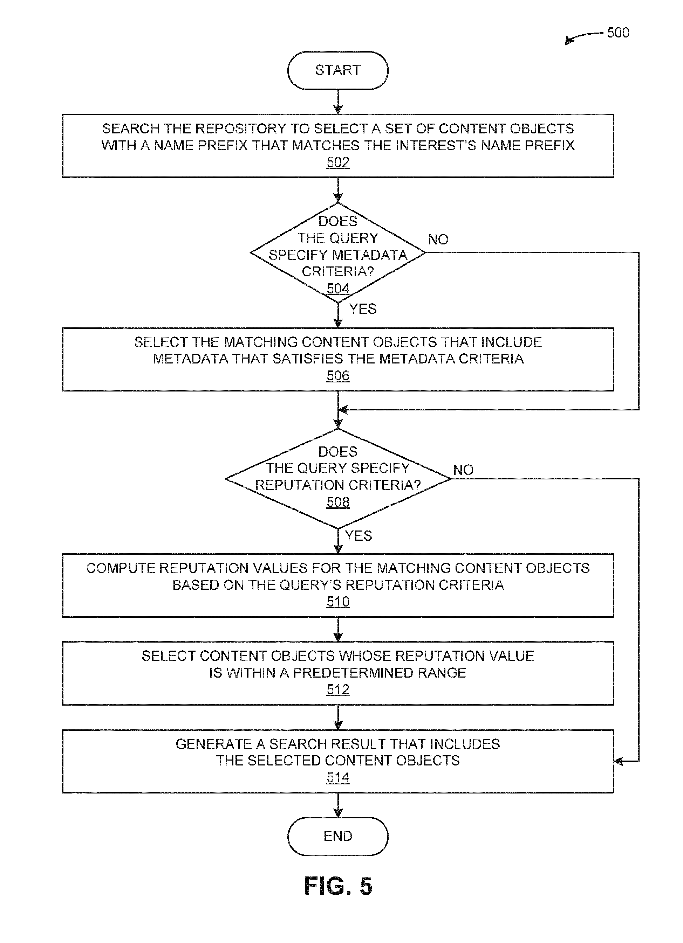

FIG. 5 presents a flow chart illustrating a method 500 for processing a query that discovers Content Objects in one or more repositories in accordance with an embodiment. Recall that the CCN node receives the query in an Interest that specifies a target name prefix. The CCN node searches for Content Objects under this name prefix. Also, the query can specify additional criteria for discovering Content Objects, such as metadata criteria, and reputation criteria.

During operation, the CCN node can search a repository to select a set of Content Objects whose name prefix matches the Interest's name prefix (operation 502). The CCN node determines whether the query specifies metadata criteria (operation 504). If so, the CCN node selects the matching Content Objects that include metadata that satisfies the query's metadata criteria (operation 506).

The CCN node also determines whether the query specifies reputation criteria (operation 508). The reputation criteria can specify which reputation attributes are to be used to process the query, and attribute weights for some or all of these attributes. The reputation criteria can also specify additional criteria, such as attribute values for certain attributes, which can be used to compute reputation values for the matching Content Objects. If the query specifies reputation criteria, the CCN node computes reputation values for the matching Content Objects based on the query's reputation criteria (operation 510), and selects the Content Objects whose reputation value is within a predetermined range (operation 512). In some embodiments, the CCN node can determine the predetermined range from the query's reputation criteria. In some other embodiments, the CCN node can be preconfigured with a target predetermined range.

The CCN node then generates the search result to include the final set of selected Content Objects (operation 514). This final set of Content Objects includes Content Objects from the repository that exist under the Interest's name prefix, and that satisfy any metadata criteria and reputation criteria specified in the Interest's query.

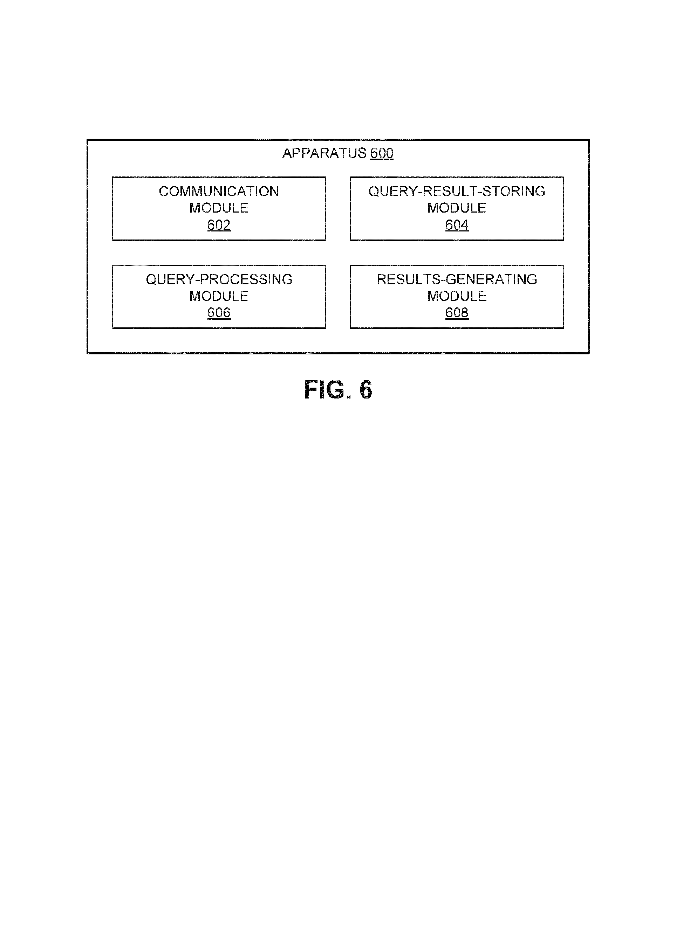

FIG. 6 illustrates an exemplary apparatus 600 that facilitates discovering content over CCN in accordance with an embodiment. Apparatus 600 can comprise a plurality of modules which may communicate with one another via a wired or wireless communication channel. Apparatus 600 may be realized using one or more integrated circuits, and may include fewer or more modules than those shown in FIG. 6. Further, apparatus 600 may be integrated in a computer system, or realized as a separate device which is capable of communicating with other computer systems and/or devices. Specifically, apparatus 600 can comprise a communication module 602, a query-result-storing module 604, a query-processing module 606, and a results-generating module 608.

In some embodiments, communication module 602 can send and/or receive content-discovery Interests, and can send and/or receive query-result Content Objects. Query-result-storing module 604 can cache any query-result Content Objects it receives. Query-processing module 606 can process a content-discovery Interest's query to select a set of Content Objects that satisfy the content-discovery Interest's query. Results-generating module 608 can generate a query-result Content Object that includes at least the names and reputation information for the selected Content Objects, and that also includes other cached query-result Content Objects associated with the content-discovery Interest's name.

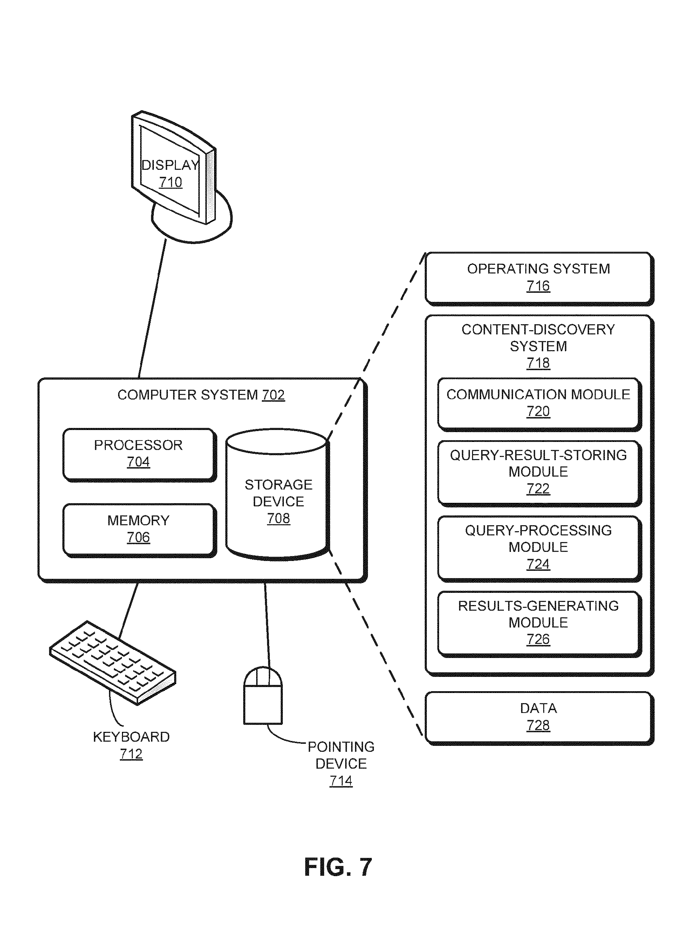

FIG. 7 illustrates an exemplary computer system 702 that facilitates discovering content over CCN in accordance with an embodiment. Computer system 702 includes a processor 704, a memory 706, and a storage device 708. Memory 706 can include a volatile memory (e.g., RAM) that serves as a managed memory, and can be used to store one or more memory pools. Furthermore, computer system 702 can be coupled to a display device 710, a keyboard 712, and a pointing device 714. Storage device 708 can store operating system 716, a content-discovery system 718, and data 728.

Content-discovery system 718 can include instructions, which when executed by computer system 702, can cause computer system 702 to perform methods and/or processes described in this disclosure. Specifically, content-discovery system 718 may include instructions for sending and/or receiving content-discovery Interests, and for sending and/or receiving query-result Content Objects. Query-result-storing module 604 can cache any query-result Content Objects it receives (communication module 720). Further, content-discovery system 718 can include instructions for processing a content-discovery Interest's query to select a set of Content Objects that satisfy the content-discovery Interest's query (query-result-storing module 722).

Content-discovery system 718 can also include instructions for processing a content-discovery Interest's query to select a set of Content Objects that satisfy the content-discovery Interest's query (query-processing module 724), and can include instructions for generating a query-result Content Object that includes at least the names and reputation information for the selected Content Objects, and that also includes other cached query-result Content Objects associated with the content-discovery Interest's name (results-generating module 726).

Data 728 can include any data that is required as input or that is generated as output by the methods and/or processes described in this disclosure. Specifically, data 828 can store at least Content Objects for one or more data collections, reputation information for the Content Objects, and query-result Content Objects that have been received from other network nodes.

The data structures and code described in this detailed description are typically stored on a computer-readable storage medium, which may be any device or medium that can store code and/or data for use by a computer system. The computer-readable storage medium includes, but is not limited to, volatile memory, non-volatile memory, magnetic and optical storage devices such as disk drives, magnetic tape, CDs (compact discs), DVDs (digital versatile discs or digital video discs), or other media capable of storing computer-readable media now known or later developed.

The methods and processes described in the detailed description section can be embodied as code and/or data, which can be stored in a computer-readable storage medium as described above. When a computer system reads and executes the code and/or data stored on the computer-readable storage medium, the computer system performs the methods and processes embodied as data structures and code and stored within the computer-readable storage medium.

Furthermore, the methods and processes described above can be included in hardware modules. For example, the hardware modules can include, but are not limited to, application-specific integrated circuit (ASIC) chips, field-programmable gate arrays (FPGAs), and other programmable-logic devices now known or later developed. When the hardware modules are activated, the hardware modules perform the methods and processes included within the hardware modules.

The foregoing descriptions of embodiments of the present invention have been presented for purposes of illustration and description only. They are not intended to be exhaustive or to limit the present invention to the forms disclosed. Accordingly, many modifications and variations will be apparent to practitioners skilled in the art. Additionally, the above disclosure is not intended to limit the present invention. The scope of the present invention is defined by the appended claims.

## Claims

1. A computer-implemented method, comprising:

   receiving, by a network node, an Interest comprising a query for discovering content associated with the Interest's name prefix;
   searching a repository for a set of Content Objects that match the query;
   determining reputation information for each Content Object in the search results;
   generating a results list that includes, for a respective Content Object in the search results, the respective Content Object's name and reputation information;
   generating a query-result Content Object that includes the Interest's name, and whose payload includes the results list; and
   returning the query-result Content Object to satisfy the Interest.

2. The method of claim 1, wherein the reputation information includes at least one of:

   a reputation value;
   a set of attribute values; and
   a set of attribute weights.

3. The method of claim 1, wherein the query includes at least one of:

   one or more attribute criteria;
   weight values for one or more attributes;
   metadata criteria; and
   a repository that is to be searched.

4. The method of claim 1, further comprising determining, from the query, a repository to search for matching Content Objects.

5. The method of claim 1, wherein searching the repository involves:

   performing a lookup in the repository to identify a Content Object with a name prefix that matches the Interest's name.

6. The method of claim 5, wherein searching the repository further involves:

   determining that the identified Content Object's attributes satisfy the query's attribute criteria.

7. The method of claim 1, wherein the repository stores the Content Object along with corresponding reputation information, and wherein determining the reputation information involves accessing the reputation information from the repository.

8. The method of claim 1, wherein the repository includes at least one of:

a Content Store that caches Content Objects; and
a storage repository that stores one or more collections of Content Objects.

9. A computer system, comprising:

one or more processors;
a memory; and
a computer-readable medium coupled to the one or more processors storing instructions stored that, when executed by the one or more processors, cause the computing system to perform a method comprising:

receiving an Interest comprising a query for discovering content associated with the Interest's name prefix;
searching a repository for a set of Content Objects that match the query;
determining reputation information for each Content Object in the search results;
generating a results list that includes, for a respective Content Object in the search results, the respective Content Object's name and reputation information;
generating a query-result Content Object that includes the Interest's name, and whose payload includes the results list; and
returning the query-result Content Object to satisfy the Interest.

10. A non-transitory computer-readable storage medium storing instructions that when executed by a computer cause the computer to perform a method, the method comprising:

receiving an Interest comprising a query for discovering content associated with the Interest's name prefix;
searching a repository for a set of Content Objects that match the query;
determining reputation information for each Content Object in the search results;
generating a results list that includes, for a respective Content Object in the search results, the respective Content Object's name and reputation information;
generating a query-result Content Object that includes the Interest's name, and whose payload includes the results list; and
returning the query-result Content Object to satisfy the Interest.

EP 2 998 886 A1

FIG. 1

11

CONTENT-DISCOVERY INTEREST
200

| NAME 202 |
|---|
| PAYLOAD 204 |

| SOURCE CRITERIA 206 |
|---|
| METADATA CRITERIA 208 |
| SIGNATURE CRITERIA 210 |
| REPUTATION CRITERIA 212 |

## FIG. 2A

QUERY-RESULT CONTENT OBJECT
250

| NAME 252 |
|---|
| PAYLOAD 254 |

| CONTENT LISTING 256 |
|---|
| QUERY-RESULT CO 258.1 |
| QUERY-RESULT CO 258.2 |
| $\vdots$ |
| QUERY-RESULT CO 258.$n$ |
| PUBLISHER DETAILS 260 |

| SIGNATURE 262 |
|---|

## FIG. 2B

— 300

```
                    ┌──────────┐
                    │  START   │
                    └──────────┘
                         │
                         ▼
┌────────────────────────────────────────────────────────────────┐
│ RECEIVE A REQUEST TO DISCOVER CONTENT FROM NEIGHBORING CCN NODES │
│                              302                                 │
└────────────────────────────────────────────────────────────────┘
                         │
                         ▼
┌────────────────────────────────────────────────────────────────┐
│    DETERMINE A NAME PREFIX UNDER WHICH TO DISCOVER CONTENT       │
│                              304                                 │
└────────────────────────────────────────────────────────────────┘
                         │
                         ▼
┌────────────────────────────────────────────────────────────────┐
│      GENERATE AN INTEREST THAT INCLUDES THE NAME PREFIX, AND     │
│ INCLUDES A QUERY FOR SEARCHING FOR CONTENT UNDER THE NAME PREFIX │
│                              306                                 │
└────────────────────────────────────────────────────────────────┘
                         │
                         ▼
┌────────────────────────────────────────────────────────────────┐
│    DISSEMINATE THE INTEREST TO QUERY THE NEIGHBORING NODES       │
│                              308                                 │
└────────────────────────────────────────────────────────────────┘
                         │
                         ▼
┌────────────────────────────────────────────────────────────────┐
│ RECEIVE A QUERY-RESULT CONTENT OBJECT THAT SATISFIES THE INTEREST│
│                              310                                 │
└────────────────────────────────────────────────────────────────┘
                         │
                         ▼
┌────────────────────────────────────────────────────────────────┐
│            CACHE THE QUERY-RESULT CONTENT OBJECT                 │
│             IN ASSOCIATION WITH THE NAME PREFIX                  │
│                              312                                 │
└────────────────────────────────────────────────────────────────┘
                         │
                         ▼
┌────────────────────────────────────────────────────────────────┐
│             OBTAIN A LISTING OF MATCHING CONTENT                 │
│           FROM THE QUERY-RESULT CONTENT OBJECT                   │
│                              314                                 │
└────────────────────────────────────────────────────────────────┘
                         │
                         ▼
                    ┌──────────┐
                    │   END    │
                    └──────────┘
```

# FIG. 3

400

```
┌─────────────┐
│    START    │
└─────────────┘
       │
       ▼
┌──────────────────────────────────────────────────────────────┐
│  RECEIVE AN INTEREST COMPRISING A CONTENT-DISCOVERY QUERY      │
│                           402                                  │
└──────────────────────────────────────────────────────────────┘
       │
       ▼
┌──────────────────────────────────────────────────────────────┐
│              DETERMINE A REPOSITORY TO SEARCH                  │
│                           404                                  │
└──────────────────────────────────────────────────────────────┘
       │
       ▼
┌──────────────────────────────────────────────────────────────┐
│  SEARCH THE REPOSITORY FOR CONTENT OBJECTS THAT MATCH THE QUERY│
│                           406                                  │
└──────────────────────────────────────────────────────────────┘
       │
       ▼
┌──────────────────────────────────────────────────────────────┐
│  GENERATE A LISTING THAT INCLUDES A NAME AND REPUTATION        │
│      INFORMATION FOR EACH MATCHING CONTENT OBJECT              │
│                           408                                  │
└──────────────────────────────────────────────────────────────┘
       │
       ▼
┌──────────────────────────────────────────────────────────────┐
│         SEARCH FOR OTHER QUERY-RESULT CONTENT OBJECTS          │
│   ASSOCIATED WITH THE INTEREST'S NAME OR NAME PREFIX           │
│                           410                                  │
└──────────────────────────────────────────────────────────────┘
       │
       ▼
┌──────────────────────────────────────────────────────────────┐
│ GENERATE A NEW QUERY-RESULT CONTENT OBJECT THAT INCLUDES THE   │
│ LISTING OF MATCHING CONTENT OBJECTS, AND INCLUDES ANY          │
│ QUERY-RESULT CONTENT OBJECTS ASSOCIATED WITH THE INTEREST'S    │
│ NAME                                                           │
│                           412                                  │
└──────────────────────────────────────────────────────────────┘
       │
       ▼
┌──────────────────────────────────────────────────────────────┐
│ RETURN THE NEW QUERY-RESULT CONTENT OBJECT TO SATISFY THE      │
│ INTEREST                                                       │
│                           414                                  │
└──────────────────────────────────────────────────────────────┘
       │
       ▼
┌─────────────┐
│     END     │
└─────────────┘
```

## FIG. 4

500

```
                    ┌──────────────┐
                    │    START     │
                    └──────┬───────┘
                           │
   ┌───────────────────────▼────────────────────────────┐
   │ SEARCH THE REPOSITORY TO SELECT A SET OF CONTENT    │
   │ OBJECTS WITH A NAME PREFIX THAT MATCHES THE         │
   │ INTEREST'S NAME PREFIX                              │
   │                      502                            │
   └───────────────────────┬────────────────────────────┘
                           │
                      ╱────▼────╲
                    ╱   DOES     ╲          NO
                  ╱  THE QUERY    ╲──────────────────┐
                 ╲ SPECIFY METADATA╱                 │
                  ╲  CRITERIA?    ╱                   │
                    ╲   504     ╱                     │
                      ╲───┬───╱                       │
                          │ YES                       │
   ┌──────────────────────▼─────────────────────────┐ │
   │ SELECT THE MATCHING CONTENT OBJECTS THAT        │ │
   │ INCLUDE METADATA THAT SATISFIES THE METADATA    │ │
   │ CRITERIA                                        │ │
   │                    506                          │ │
   └──────────────────────┬─────────────────────────┘ │
                          │◄────────────────────────────┘
                     ╱────▼────╲
                   ╱   DOES     ╲         NO
                 ╱ THE QUERY SPECIFY╲──────────────────┐
                 ╲ REPUTATION CRITERIA?╱               │
                   ╲    508    ╱                        │
                     ╲───┬───╱                          │
                         │ YES                          │
   ┌─────────────────────▼──────────────────────────┐  │
   │ COMPUTE REPUTATION VALUES FOR THE MATCHING      │  │
   │ CONTENT OBJECTS BASED ON THE QUERY'S REPUTATION │  │
   │ CRITERIA                                        │  │
   │                    510                          │  │
   └─────────────────────┬──────────────────────────┘  │
                         │                              │
   ┌─────────────────────▼──────────────────────────┐  │
   │ SELECT CONTENT OBJECTS WHOSE REPUTATION VALUE   │  │
   │ IS WITHIN A PREDETERMINED RANGE                 │  │
   │                    512                          │  │
   └─────────────────────┬──────────────────────────┘  │
                         │                              │
   ┌─────────────────────▼──────────────────────────┐  │
   │ GENERATE A SEARCH RESULT THAT INCLUDES          │◄─┘
   │ THE SELECTED CONTENT OBJECTS                    │
   │                    514                          │
   └─────────────────────┬──────────────────────────┘
                         │
                    ┌────▼────┐
                    │   END   │
                    └─────────┘
```

**FIG. 5**

APPARATUS 600

COMMUNICATION
MODULE
602

QUERY-RESULT-STORING
MODULE
604

QUERY-PROCESSING
MODULE
606

RESULTS-GENERATING
MODULE
608

# FIG. 6

**FIG. 7**

Europäisches
Patentamt

European
Patent Office

Office européen
des brevets

# EUROPEAN SEARCH REPORT

Application Number

EP 15 18 3578

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | EP 2 120 419 A2 (PALO ALTO RES CT INC [US]) 18 November 2009 (2009-11-18)<br>* abstract *<br>* paragraph [0035] *<br>* paragraph [0058] *<br>* paragraph [0012] *<br>----- | 1-10 | INV.<br>G06F17/30 |
| Y | US 2008/155465 A1 (FU YUN [US] ET AL) 26 June 2008 (2008-06-26)<br>* claims 1-4 *<br>----- | 1-10 | |

TECHNICAL FIELDS
SEARCHED      (IPC)

G06F

The present search report has been drawn up for all claims

| Place of search | Date of completion of the search | Examiner |
|---|---|---|
| Berlin | 11 February 2016 | Schmidt, Axel |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

.................................................................................................

& : member of the same patent family, corresponding
document

EPO FORM 1503 03.82 (P04C01)

**ANNEX TO THE EUROPEAN SEARCH REPORT**
**ON EUROPEAN PATENT APPLICATION NO.**

EP 15 18 3578

This annex lists the patent family members relating to the patent documents cited in the above-mentioned European search report.
The members are as contained in the European Patent Office EDP file on
The European Patent Office is in no way liable for these particulars which are merely given for the purpose of information.

11-02-2016

| Patent document cited in search report | | Publication date | Patent family member(s) | | Publication date |
|---|---|---|---|---|---|
| EP 2120419 | A2 | 18-11-2009 | EP 2120419 A2 | | 18-11-2009 |
| | | | JP 5536362 B2 | | 02-07-2014 |
| | | | JP 2009277234 A | | 26-11-2009 |
| | | | US 2009287835 A1 | | 19-11-2009 |
| US 2008155465 | A1 | 26-06-2008 | NONE | | |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 84781413 A

- US 33817508 A